# EUROPÄISCHE PATENTSCHRIFT

(11) **EP 1 272 085 B1**
(45) Veröffentlichungstag und Bekanntmachung des Hinweises auf die Patenterteilung: **04.08.2004**
(21) Anmeldenummer: 01919336.6
(22) Anmeldetag: 23.02.2001
(51) Int. Cl.: A47J 43/08

(54) **KÜCHENMASCHINE**
KITCHEN MACHINE
ROBOT MENAGER

(30) Priorität: 31.03.2000 DE 10016302
(43) Veröffentlichungstag der Anmeldung: 08.01.2003
(73) Patentinhaber: BSH Bosch und Siemens Hausgeräte GmbH, 81739 München (DE)
(72) Erfinder: PESEC, Jurij, 3301 Petrovce (SI); PAVLOVIC, Henrik, 3333 Ljubno (SI); ZIBRET, Igor, 3327 Smartno ob Paki (SI); BREZOVNIK, Peter, 3330 Mozirje (SI)
(86) Internationale Anmeldenummer: PCT/EP2001/002080
(87) Internationale Veröffentlichungsnummer: WO 2001/074208

(56) Entgegenhaltungen:
- EP-A- 0 570 758
- DE-A- 3 045 088
- DE-B- 1 183 645
- DE-C- 3 718 161
- GB-A- 2 218 347
- US-A- 3 220 450

## Beschreibung

Die Erfindung betrifft eine Küchenmaschine, mit einem in deren Gehause angeordneten Antriebsaggregat, das antriebmäßig mit einem Getrieberad gekuppelt ist, das in seiner Achsmitte mit einer ersten Abtriebswelle verbunden ist, welche Abtriebswelle ferner mit einem Antriebsritzel für ein dem Getrieberad zugeordnetes Planetengetriebe versehen ist, mit dessen Planetenträger eine die erste Abtriebswelle konzentrisch umgebende weitere Abtriebswelle verbunden ist.

Bei einer solchen auf dem Markt befindlichen Küchenmaschine, wie in DE 3045088 beschrieben, ist das Planetengetriebe in axialer Richtung über dem Getrieberad angeordnet. Hierdurch ergibt sich gegenüber einer Küchenmaschine ohne ein solches Planetengetriebe eine Vergrößerung der Bauhöhe

Der Erfindung hegt die Aufgabe zugrunde, eine Küchenmaschine der eingangs beschriebenen Art so weiterzubilden, daß trotz des Einbaues eines Planetengetriebes das Bauvolumen nicht vergrößert wird.

Die Lösung der gestellten Aufgabe gelingt nach der Erfindung wie in den Patentansprüchen gekennzeichnet dadurch, daß das Getrieberad topfförmig ausgebildet ist und an seinem Topfmantel eine Außenverzahnung aufweist und daß der feststehende Zahnkranz des Planetengetriebes als topfförmiger Hohlradzahnkranz ausgebildet und konzentnsch in den Topfraum des Getrieberades eingesetzt ist. Durch die topfformige Ausbildung des Getrieberades wird ein Aufnahmeraum für das Planetengetriebe geschaffen, so daß es trotz des Einbaues des Planetengetriebes zu keiner Bauhöhenvergroßerung gegenuber einer Küchenmaschine ohne ein solches Planetengetnebe kommt. Zudem reduziert sich die Bauhöhe der Küchenmaschine unter Anwendung des erfindungsgemäßen Planetengetriebes gegenüber Küchenmaschinen mit herkömmlichen Planetengetrieben.

Eine selbststandig handhabbare Getriebeeinheit ergibt sich dadurch, daß das eine Ende der ersten Abtriebswelle am Gehauseunterteil der Küchenmaschine und das andere Ende in einer am Deckel einer der Kuchenmaschine zugeordneten Rührschussel vorgesehenen Lageraufnahme gelagert ist Das Getrieberad und der die Planetenräder sowie deren Planetentrager enthaltende Hohlradzahnkranz können außerhalb der Kuchenmaschine zusammengefugt und dann als Einheit am Gehause der Küchenmaschine montiert werden

Bei einer solchen Getriebeeinheit ist es montagefreundlich, wenn an dem Hohlradzahnkranz U-förmige, den Topfmantel des Getneberades übergreifende und am Gehäuse befestigbare Tragarme vorgesehen sind. Der Hohlradzahnkranz kann dann in einfacher Weise am Gehause der Kuchenmaschine befestigt werden.

Eine weitere Einsparung an Montagegangen wird dadurch erreicht, daß das Sonnenrad des Planetengetriebes an der Innnenseite des Topfbodens des Getrieberades angeformt ist.

Eine ausreichende Kühlung der Getnebeeinheit wird dadurch erzielt, daß an der Außenseite des Topfbodens des Getneberades Ventilatorflügel angeordnet sind.

Dadurch, daß die Ventilatorflügel an dem Topfboden angeformt sind, entfällt ein gesonderter Montagevorgang für das Anbnngen der Ventilatorflügel. Diese Ventilatorflügel dienen zugleich als Versteifungsrippen für das Getrieberad.

Besonders gunstig hinsichtlich seiner Verwindungssteifigkeit konzipiert ist das Getneberad, wenn nach einer nachsten vorteilhaften Ausführungsform des Gegenstands der Erfindung vorgesehen ist, daß die Ventilatorflügel sich zum Zentrum des Topfbodens hin in ihrer Hohe verjüngen.

Besonders günstig ist die Warmeabfuhr am Getrieberad, wenn gemäß einer weiteren bevorzugten Ausführungsform des Gegenstandes der Erfindung vorgesehen ist, daß die Ventilatorflügel entgegen der Drehrichtung des Getrieberades gekrümmt sind.

Besonders gerauscharm gelagert ist das Planetengetriebe innerhalb des Gehauses, wenn nach einer weiteren bevorzugten Ausführungsform des Gegenstandes der Erfindung vorgesehen ist, daß die Tragarme durch elastisch ausgebildete Lagerelemente am Gehause gelagert sind Hierdurch ergibt sich eine geräuschabsorbierend wirkende Ankopplung des Planetengetriebes an das Gehäuse.

Weitere vorteilhafte Ausführungsformen sind in den Unteranspruchen angegeben:

Anhand eines in der Zeichnung dargestellten Ausführungsbeispieles wird die Erfindung nachfolgend noch naher erlautert Es zeigen:

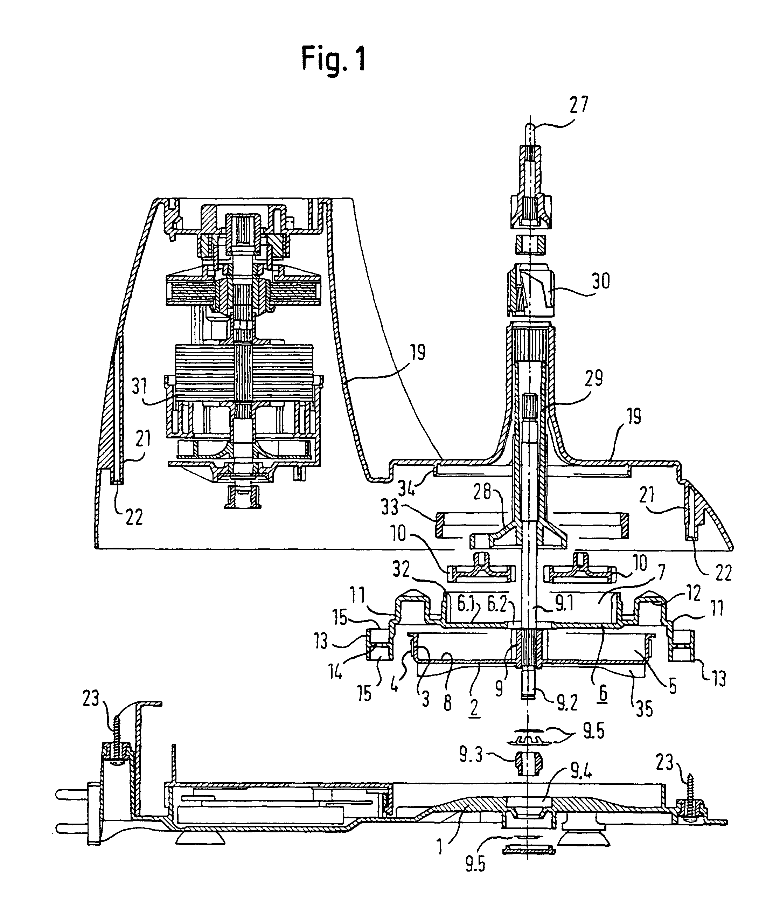

- Fig. 1: eine Küchenmaschine in explosionsartiger Darstellung

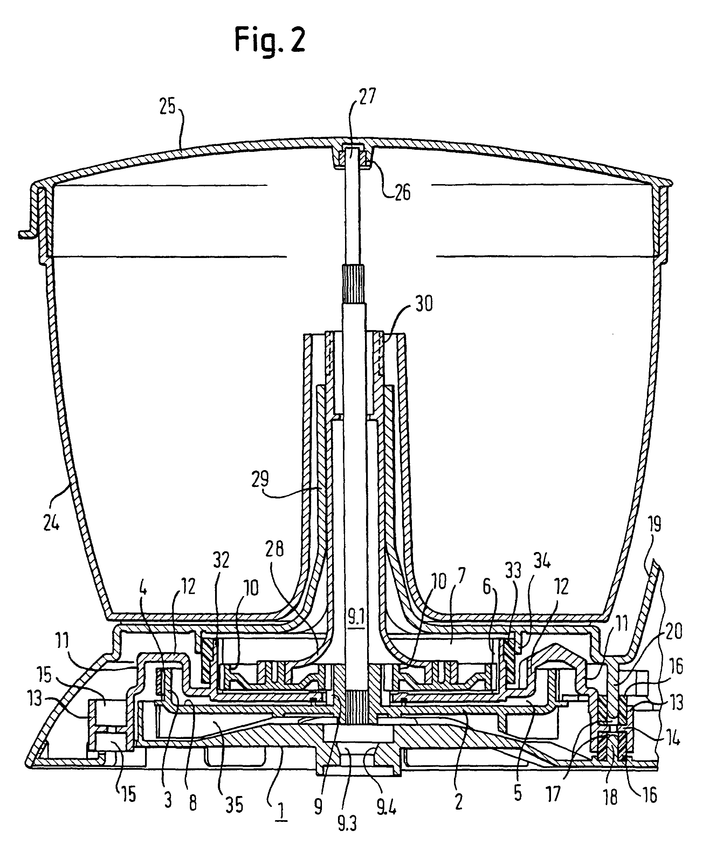

- Fig. 2: den Antriebsteil einer Küchenmaschine mit aufgesetzter Rührschussel.

Mit 1 ist der untere Gehäuseteil einer Kuchenmaschine bezeichnet. An diesem ist ein topfförmig ausgebildetes Getneberad 2 drehbar gelagert. An dem Topfmantel 3 des Getrieberades 2 ist eine Außenverzahnung 4 für einen vom Antriebsmotor 31 der Küchenmaschine angetriebenen Zahnnemen vorhanden. Im Topfraum 5 des Getrieberades 2 ist der als Hohlradzahnkranz 6 ausgebildete feststehende Zahnkranz eines Planetengetnebes angeordnet, dessen Kranzboden 6.1 in seinem Zentrum einen Durchbruch 6.2 aufweist.

Im Innenraum 7 des Hohlradzahnkranzes 6 sind mehrere, über ein in der Mitte des Topfbodens 8 des Getrieberades 2 angeformtes Sonnenrad 9 angetriebene Planetenräder 10 angeordnet, wobei das Sonnenrad 9 im Montagezustand des Hohlradzahnkranzes 6 durch den Durchbruch 6.2 ragt. Außerdem ist in der Mitte des Topfbodens 8 eine erste Abtriebswelle 9.1 drehfest mit dem Getneberad 2 verbunden, wobei die Antriebswelle 9.1 einen Lagerstummel 9.2 besitzt, welcher anhand einer elastisch ausgebildeten Aufnahme 9.3 in einer Lageraufnahme 9 4 des Gehauseteils 1 gelagert und mit Haltemittel 9 5 losbar an diesem Gehauseteil 1 festgesetzt ist. An der Außenseite des Zahnkranzes 6 sind mit gleichmäßigem Umfangsabstand drei nach radial außen abragende Tragarme 11 angeformt Die Tragarme 11 weisen eine U-förmige Abknickung 12 auf, mit der sie den Topfmantel 3 des Getneberades 2 übergreifen. Am freien Ende der Tragarme 11 befinden sich hülsenförmige Befestigungselemente 13, die im Innern einen Zwischenboden 14 aufweisen Die hülsenförmigen Befestigungselemente 13 bilden somit zwei einander gegenuberliegende Aufnahmen 15, in die jeweils ein aus elastischem Material bestehendes als Lagerelement dienendes Rohrteil 16 eingesetzt ist.

Das in der zu dem unteren Gehäuseteil 1 gerichteten Aufnahme 15 eingesetzte Rohrteil 16 ist mit seiner Rohroffnung 17 auf einen am unteren Gehäuseteil 1 angeformtem Zapfen 18 aufgesteckt. Hierdurch wird der Zahnkranz 6 verdrehsicher und geräuscheentkoppelt am unteren Gehäuseteil 1 gehalten. Das obere Gehäuseteil 19 der Küchenmaschine ist mit an ihm angeformten Haltezapfen 20 in die Rohröffnung 17 des in die obenliegende Aufnahme 15 eingesetzten Rohrteiles 16 eingesteckt. Der Hohlradzahnkranz 6 wird außer über die Tragarme 11 auch noch über einen auf seinen Topfrand 32 aufgesteckten elastischen Ring 33, der bei aufgesetztem Gehäuseoberteil 19 in einen an diesem angeformten Ringbund 34 eingreift, am Gehauseoberteil 19 gehalten. Hierdurch ist eine gute Zentrierung des Zahnkranzes 6 gewährleistet. Die komplette Getriebeeinheit sowie das untere und obere Gehäuseteil 1 und 19 sind somit durch einfaches Zusammenstecken vormontierbar. Durch Schrauben 23, die jeweils in eine an Verbindungszapfen 21 des oberen Gehauseteiles 19 vorgesehene Bohrung eingeschraubt werden, erfolgt eine feste Verbindung der Gehauseteile 1 und 19.

Auf die Rührschüssel 24 der Küchenmaschine ist ein Deckel 25 aufgesetzt, der in seiner Mitte eine Lageraufnahme 26 für das freie Wellenende 27 der ersten Abtriebswelle 9.1 aufweist. Durch die Lagerung des freien Endes der ersten Abtriebswelle 9.1 an dem Dekkel 25 der Rührschüssel 24 einerseits und der Lagerung des Lagerstummels 9.2 im Gehäuseteil 1 andererseits ist die gesamte Antriebseinheit über die erste Abtriebselle 9.1 gelagert. Diese konstruktive Gestaltung ermöglicht es, das aus dem Getrieberad 2 und dem Planetengetriebe (Planetenräder 10 und Zahnkranz 6) und der Antriebswelle 9.1 bestehende Getriebemodul als eine Einheit vorzufertigen. Diese Einheit kann dann am unteren Gehäuseteil 1 wie bereits beschrieben durch reine Steckmontage montiert werden. Dies bedeutet eine wesentliche Fertigungsvereinfachung. Danach braucht nur noch das obere Gehauseteil 19 aufgesetzt und durch die Schrauben 23 mit dem unteren Gehäuseteil 1 verbunden zu werden.

Mit dem die Planetenrader 10 tragenden Planetentrager 28 ist eine Hohlwelle 29 verbunden, welche eine weitere Abtriebswelle bildet. Diese weitere Abtriebswelle 29 dreht gegenuber der ersten Abtriebswelle 9 1 mit einer geringeren Drehzahl. Am freien Ende der weiteren Abtriebselle 29 ist ein Abtriebsritzel 30 vorsehen, auf das ein entsprechendes Werkzeug der Küchenmaschine, z. B Knethaken oder dergleichen, aufgesteckt werden kann. Damit stehen für die verschiedenen Werkzeuge geeignete Antriebsdrehzahlen zur Verfugung.

Eine zu starke Erwärmung des Getriebemoduls durch die im Getnebe entstehende Reibungswarme kann dadurch verhindert werden, daß an der Außenseite des Topfbodens 8 Ventilatorflügel 35 vorgesehen sind. Durch diese Ventilatorflügel 35 wird eine starke Luftbewegung in der Umgebung der Getriebeeinheit erzeugt. Durch diese Luftbewegung wird eine gute Kühlung der Getriebeeinheit erzielt. Die Ventilatorflügel 35 können bei der Herstellung des Getrieberades 2 gleich an dessen Topfboden 8 mit angeformt werden, so daß für die Ventilatorflügel 35 lediglich ein gewisser Materialaufwand aber kein zusätzlicher Montageaufwand entsteht.

## Patentansprüche

1. Küchenmaschine, mit einem in deren Gehäuse (19) angeordneten Antriebsaggregat (31), das antriebsmäßig mit einem Getrieberad (2) gekuppelt ist, das in seiner Achsmitte mit der ersten Abtriebswelle (9.1) verbunden ist, welche Abtriebswelle (9.1) ferner mit einem Antriebsritzel (9) für ein dem Getrieberad (2) zugeordnetes Planetengetriebe (6;10) versehen ist, mit dessen Planetenträger (28) eine die erste Abtriebswelle (9.1) konzentrisch umgebende weitere Abtriebswelle (29) verbunden ist, **dadurch gekennzeichnet, dass** das Getrieberad (2) topfförmig ausgebildet ist und an seinem Topfmantel (3) eine vom Antriebsaggregat (31) angetriebene Außenverzahnung (4) aufweist und dass der feststehende Zahnkranz (6) des Planetengetriebes als topfförmiger Hohlradzahnkranz (6) ausgebildet und konzentrisch in den Topfraum (5) des Getrieberades (2) eingesetzt ist.

2. Küchenmaschine nach Anspruch 1, **dadurch gekennzeichnet, dass** das eine Ende der ersten Abtriebswelle (9.1) lösbar am Gehäuseunterteil (1) der Küchenmaschine und das andere Ende (27) in einer am Deckel (25) einer der Küchenmaschine zugeordneten Rührschüssel (24) vorgesehen Lageraufnahme (26) gelagert ist.

3. Küchenmaschine nach Anspruch 1 oder 2, **dadurch gekennzeichnet, dass** an dem Hohlradzahnkranz (6) des Planetengetriebes den Topfmantel (3) des Getrieberades (2) übergreifende und am Gehäuse (1) befestigbare Tragarme (11) vorgesehen sind.

4. Küchenmaschine nach Anspruch 3, **dadurch gekennzeichnet, dass** die Tragarme (11) U-förmig ausgebildet sind.

5. Küchenmaschine nach Anspruch 3 o der 4, **dadurch gekennzeichnet, dass** die Tragarme (11) an den Hohlradzahnkranz (6) mitangeformt sind.

6. Küchenmaschine nach Anspruch 3 bis 5, **dadurch gekennzeichnet, dass** die Tragarme (11) lösbar am Gehäuse (1) verdrehfest gelagert sind.

7. Küchenmaschine nach Anspruch 6, **dadurch gekennzeichnet, dass** die Tragarme (11) durch elastisch ausgebildete Lagerelemente am Gehäuse (1) gelagert sind.

8. Küchenmaschine nach Anspruch 3 bis 7, **dadurch gekennzeichnet, dass** die Haltearme (11) form-, und/oder kraftschlüssig vom Gehäuse (19) zumindest in Achsrichtung der Antriebswelle (9. 1) gesichert sind.

9. Küchenmaschine nach einem der vorhergehenden Ansprüche, **dadurch gekennzeichnet, dass** das Sonnenrad (9) des Planetengetriebes an der Innenseite des Topfbodens (8) des Getrieberades (2) angeformt ist.

10. Küchenmaschine nach einem der vorhergehenden Ansprüche, **dadurch gekennzeichnet, dass** an der Außenseite des Topfbodens (8) des Getrieberades Ventilatorflügel (35) angeordnet sind.

11. Küchenmaschine nach Anspruch 5, **dadurch gekennzeichnet, dass** die Ventilatorflügel (35) an dem Topfboden (8) angeformt sind.

12. Küchenmaschine nach einem der Ansprüche 10 oder 11, **dadurch gekennzeichnet, dass** die Ventilatorflügel (35) sich zum Zentrum dese Topfbodens (8) hin in-ihrer Höhe verjüngen.

13. Küchenmaschine nach einem der Ansprüche 10 bis 12, **dadurch gekennzeichnet, dass** die Ventilatorflügel (35) entgegen der Drehrichtung des Getrieberades (2) gekrümmt sind.

## Claims

1. Food processor, with a drive unit (31) arranged in the housing (19) thereof and coupled in terms of drive with a gearwheel (2), which is connected in its axial centre with the first driven shaft (9.1), which driven shaft (9.1) is further provided with a drive pinion (9) for a planetary gear (6; 10), which is associated with the gearwheel (2) and with the pinion cage (28) of which a further driven shaft (29), which concentrically surrounds the first driven shaft (9.1), is connected, **characterised in that** the gearwheel (2) is formed to be pot-shaped and has at its pot casing (3) an external toothing (4) driven by the drive unit (31) and that the stationary rim gear (6) of the planetary gear is formed as a pot-shaped internally toothed rim gear (6) and is inserted concentrically in the pot space (5) of the gearwheel (2).

2. Food processor according to claim 1, **characterised in that** one end of the first driven shaft (9.1) is detachably mounted at the housing lower part (1) of the food processor and the other end (27) is mounted in a bearing receptacle (26) provided at the roof (25) of a mixing bowl (24) associated with the food processor.

3. Food processor according to claim 1 or 2, **characterised in that** support arms (11) engaging over the pot casing (3) of the gear wheel (2) and fastenable to the housing (1) are provided at the internally toothed rim gear (6) of the planetary gear.

4. Food processor according to claim 3, **characterised in that** the support arms (11) are constructed to be U-shaped.

5. Food processor according to claim 3 or 4, **characterised in that** the support arms (11) are integrally formed at the internally toothed rim gear (6).

6. Food processor according to claim 3 to 5, **characterised in that** the support arms (11) are detachably mounted at the housing (1) to be secure against turning.

7. Food processor according to claim 6, **characterised in that** the support arms (11) are mounted by resiliently constructed mounting elements at the housing (1).

8. Food processor according to claim 3 to 7, **characterised in that** the retaining arms (11) are secured in shape-locking and/or force-locking manner by the housing (19) at least in axial direction of the drive shaft (9.1).

9. Food processor according to one of the preceding claims, **characterised in that** the sun wheel (9) of the planetary gear is integrally formed at the inner side of the pot base (8) of the gearwheel (2).

10. Food processor according to one of the preceding claims, **characterised in that** fan blades (35) are arranged at the outer side of the pot base (8) of the gearwheel.

11. Food processor according to claim 5, **characterised in that** the fan blades (35) are integrally formed at the pot base (8).

12. Food processor according to one of claims 10 and 11, **characterised in that** the fan blades (35) taper in their height towards the centre of this pot base (8).

13. Food processor according to one of claims 10 to 12, **characterised in that** the fan blades (35) are curved against the direction of rotation of the gearwheel (2).

## Revendications

1. Robot ménager avec un groupe d'entraînement (31) disposé dans son boîtier (19) et couplé avec une roue d'engrenage (2) laquelle est reliée, au centre de son axe, au premier arbre de sortie (9.1), lequel arbre de sortie (9.1) est muni en outre d'un pignon d'entraînement (9) pour un engrenage planétaire (6 ; 10) associé à la roue d'engrenage (2) et dont le porte-planétaire (28) est relié à un autre arbre de sortie (29) entourant concentriquement le premier arbre de sortie (9.1), **caractérisé en ce que** la roue d'engrenage (2) est réalisée en forme de pot et comporte sur son enveloppe (3) une denture extérieure (4) entraînée par le groupe d'entraînement (31) et **en ce que** la couronne dentée fixe (6) de l'engrenage planétaire est réalisée comme roue à denture intérieure (6) en forme de pot et est placée concentriquement dans le creux (5) de la roue d'engrenage (2).

2. Robot ménager selon la revendication 1, **caractérisé en ce que** l'une des extrémités du premier arbre de sortie (9.1) est logée de manière amovible sur le bas de boîtier (1) du robot ménager et l'autre extrémité (27) dans un logement (26) prévu sur le couvercle (25) d'un bol mélangeur (24) associé au robot ménager.

3. Robot ménager selon la revendication 1 ou 2, **caractérisé en ce que** des bras de support (11), s'étendant au-delà de l'enveloppe (3) de la roue d'engrenage (2) et aptes à être fixés sur le boîtier (1), sont prévus sur la roue à denture intérieure (6) de l'engrenage planétaire.

4. Robot ménager selon la revendication 3, **caractérisé en ce que** les bras de support (11) présentent une forme en U.

5. Robot ménager selon la revendication 3 ou 4, **caractérisé en ce que** les bras de support (11) sont en même temps formés sur la roue à denture intérieure (6).

6. Robot ménager selon les revendications 3 à 5, **caractérisé en ce que** les bras de support (11) sont logés de manière non rotative et amovible sur le boîtier (1).

7. Robot ménager selon la revendication 6, **caractérisé en ce que** les bras de support (11) sont logés à l'aide d'éléments d'appui élastiques sur le boîtier (1).

8. Robot ménager selon les revendications 3 à 7, **caractérisé en ce que** les bras de support (11) sont protégés du boîtier (19) par adhérence et/ou par concordance des formes, au moins selon l'axe de l'arbre d'entraînement (9.1).

9. Robot ménager selon l'une des revendications précédentes, **caractérisé en ce que** la roue solaire (9) de l'engrenage planétaire est formée sur le côté intérieur du fond (8) de la roue d'engrenage (2).

10. Robot ménager selon l'une des revendications précédentes, **caractérisé en ce que** des ailettes de ventilateur (35) sont placées sur le côté extérieur du fond (8) de la roue d'engrenage.

11. Robot ménager selon la revendication 5, **caractérisé en ce que** les ailettes de ventilateur (35) sont formées sur le fond (8).

12. Robot ménager selon l'une des revendications 10 ou 11, **caractérisé en ce que** les ailettes de ventilateur (35) diminuent en hauteur vers le centre du fond (8).

13. Robot ménager selon l'une des revendications 10 à 12, **caractérisé en ce que** les ailettes de ventilateur (35) sont courbées dans le sens inverse du sens de rotation de la roue d'engrenage (2).
